# EUROPEAN PATENT APPLICATION

(11) **EP 3 410 590 A1**
(43) Date of publication of application: **05.12.2018**
(21) Application number: 17174297.6
(22) Date of filing: 02.06.2017
(51) Int. Cl.: H02M 1/32

(54) **IMPROVEMENTS IN OR RELATING TO CONVERTERS FOR INTERCONNECTING FIRST AND SECOND ELECTRICAL NETWORKS**

(71) Applicant: General Electric Technology GmbH, 5400 Baden (CH)
(72) Inventor: KEITLEY, Adrian, Stafford, Staffordshire ST17 9QX (GB)
(74) Representative: Fischer, Michael Maria

(57) **Abstract**

A converter assembly (10; 60) comprises a converter (12; 62) for interconnecting first and second electrical networks (14, 18). The converter (12; 62) includes at least one control module (22) that is programmed to control directly in accordance with a control program stored therein the switching of one or more switches (24) in a switching module (26) of the converter (12; 62). The converter (12; 62) also includes at least one energy storage device (28) which is configured to store energy to at least in part supply power to at least one corresponding control module (22). The converter assembly (10; 60) additionally includes a high-level controller (48) which is arranged in communication with the converter (12; 62) and the or each control module (22) therein. The high-level controller (48) is programmed to transition the converter (12; 62) from an on-line condition to an off-line condition during which transition the or each energy storage device (28) within the converter (12; 62) discharges the energy stored therein. The high-level controller (48) is also further programmed to replace the control program of at least one control module (22) of the converter (12; 62) during the said transition from an on-line condition to an off-line condition.

## Description

This invention relates to a converter assembly.

In power transmission networks alternating current (AC) power is typically converted to direct current (DC) power for transmission via overhead lines and/or under-sea cables. This conversion removes the need to compensate for the AC capacitive load effects imposed by the transmission line or cable and reduces the cost per kilometre of the lines and/or cables, and thus becomes cost-effective when power needs to be transmitted over a long distance.

Converters are used to convert AC power to DC power. Switches, such as semiconductor switching elements are a key component of such converters, and act to help convert AC power to DC power and vice versa. Typically the switches are controlled by one or more control modules and in some circumstances it would be useful to be able to replace the control program in accordance with which a particular control module is controlling the switching of one or more associated switches.

For example, replacing the control program of control module within a converter that has entered service could be used to take advantage of improved control and protection algorithms for the switches which may have been developed with the hindsight of operational experience. Also, if a bug is detected in an existing control program the control program could be replaced to mitigate a risk of the associated converter failing.

According to a first aspect of the invention there is provided a converter assembly comprising:
a converter for interconnecting first and second electrical networks, the converter including:
   at least one control module programmed to control directly in accordance with a control program stored therein the switching of one or more switches in a switching module of the converter; and
   at least one energy storage device configured to store energy to at least in part supply power to at least one corresponding control module; and
a high-level controller arranged in communication with the converter and the or each control module therein, the high-level controller being programmed to transition the converter from an on-line condition to an off-line condition during which transition the or each energy storage device within the converter discharges the energy stored therein, and the high-level controller being further programmed to replace the control program of at least one control module of the converter during the said transition from an on-line condition to an off-line condition.

Replacing a control program, i.e. updating the control program, of one or more control modules during transition of the converter from an on-line condition to an off-line condition means that the control and protection functions provided by the or each control module are temporarily unneeded, and so there is no requirement for one or more duplicate control modules and a change-over arrangement that would otherwise be necessary to maintain the aforesaid control and protection functions.

In addition, switching of the or each switch within the converter has ceased during such a transition, and so the main source of electromagnetic interference is removed. The absence of electromagnetic interference means that a replaced control program is less likely to have become corrupted and so there is a commensurate reduction in the likelihood of the process of replacing the control program of one or more control modules failing.

Nevertheless, because the or each energy storage device has yet to discharge completely, there remains a supply of power to permit continued operation of the or each control module in a manner that allows the replacement of its control program.

Moreover, replacement of the control program of one or more such control modules in the foregoing manner takes place without the need for access to the converter, e.g. by a maintenance engineer, so no earthing down procedure or the like is required.

Preferably the converter includes a plurality of switching modules, each of which switching module includes a plurality of switches connected in parallel with a respective corresponding energy storage device, and each of which switching module is arranged in direct communication with a respective corresponding control module programmed to control directly the switching of the plurality of said switches.

Such an arrangement brings the benefits of the invention to a particular class of converters which utilise stepped variable voltage sources to generate voltage waveforms that permit them to provide the aforementioned power transfer functionality between AC and DC networks.

Optionally the converter includes a switching module including a plurality of switches, each of which switch has an energy storage device connected in parallel therewith, and each of which switch is arranged in direct communication with a respective corresponding control module programmed to control directly the switching of the said corresponding switch.

This arrangement brings the benefits of the invention to a further class of converters which rely on a line voltage of the AC network to effect commutation of the switches therein.

The converter may include a plurality of control modules and the high-level controller may be programmed to replace the control program of a sub-set of all of the control modules.

Having the high-level controller so programmed allows the replacement control program to be trialled without the risk of adversely impacting too drastically on the normal operation of the converter.

In a preferred embodiment of the invention the converter includes a plurality of control modules and the high-level controller is programmed to concurrently replace the control program of all control modules.

Concurrent replacement of the control program of all control modules dramatically reduces the time required to replace the control program of all control modules, e.g. compared with doing this serially, i.e. one after another, and so lowers the cost of carrying out such an update because converter downtime is much reduced.

Moreover, minimal manpower is required since replacement of the control programs can be initiated and carried out by a single maintenance engineer via operation of the high-level controller.

In addition, security of the update is improved because replacement of the control programs is controlled from a single source, i.e. a single replacement control program disseminated by the high-level controller, rather than multiple individual copies of the replacement control program.

Preferably the or each control module is configured to check a replacement control program received from the high-level controller and to communicate the outcome of a check of the received replacement control program to the high-level controller.

The inclusion of one or more such control modules permits the detection of corrupted code in the transferred replacement control program.

In a further preferred embodiment of the invention the high-level controller is, on receipt of a check message indicating an error in the replacement control program received by a given control module, programmed to resend the replacement control program to the said control module.

The inclusion of such a high-level controller helps to ensure replacement of the control program of a given control module goes ahead but in a manner which maintains the integrity of the said given control module.

The high-level controller may be programmed to abort further attempts to replace the control program of a given control module following the receipt of multiple check messages indicating an error in the replacement control program received by the said given control module.

A high-level controller programmed in such a manner helps to ensure that sufficient time within the transition of the converter from its on-line condition to its off-line condition remains for replacement of the control program of one or more other control modules to still take place.

Optionally the high-level controller additionally establishes a minimum required energy storage level for the or each energy storage device, the or each respective minimum required energy storage level corresponding to a remaining amount of energy discharge time.

Having the high-level controller establish such a minimum required energy storage level for the or each energy storage device assists in ensuring that an associated control module has sufficient time, before the available power supply is depleted to such an extent that operation of the control module is no longer possible, to have its control program replaced.

Preferably after checking of the or each replacement control program by the or each control module, the high-level controller checks the energy storage level of the or each energy storage device against the corresponding established minimum required energy storage level.

Having such a high-level controller provides the option of, e.g. aborting replacement of the control program of the or each control module associated with an energy storage device with an energy level below the corresponding established minimum required energy storage level.

In a still further preferred embodiment of the invention the high-level controller being programmed to transition the converter from an on-line condition to an off-line condition includes transitioning the converter into a standby mode before the or each energy storage device within the converter begins to discharge the energy stored therein.

Having a high-level controller that is so programmed allows the converter to sit in a condition, i.e. in its standby mode in which the main source of electromagnetic interference is reduced because the flow of current is much reduced, such that it is therefore possible safely to transfer control program data to the or each control module in readiness for replacing the control program thereon without discharge of the or each energy storage device having yet started. As a consequence the remaining time available for completing replacement of the or each control program, i.e. as provided by the discharge time of the or each energy storage device, is maximised.

There now follows a brief description of preferred embodiments of the invention, by way of non-limiting example, with reference being made to the following figures in which:
Figure 1 shows a portion of a converter assembly according to a first embodiment of the invention;
Figure 2(a) shows a schematic view of a switching module within a first converter in the converter assembly shown in Figure 1;
Figure 2(b) shows a schematic view of an alternative switching module;
Figure 3 shows a schematic view of a second converter assembly in which the first converter shown partially in the converter assembly shown in Figure 1 is replaced by a second converter;
Figure 4 shows a schematic view of a portion of a switching module within the second converter shown in Figure 3.

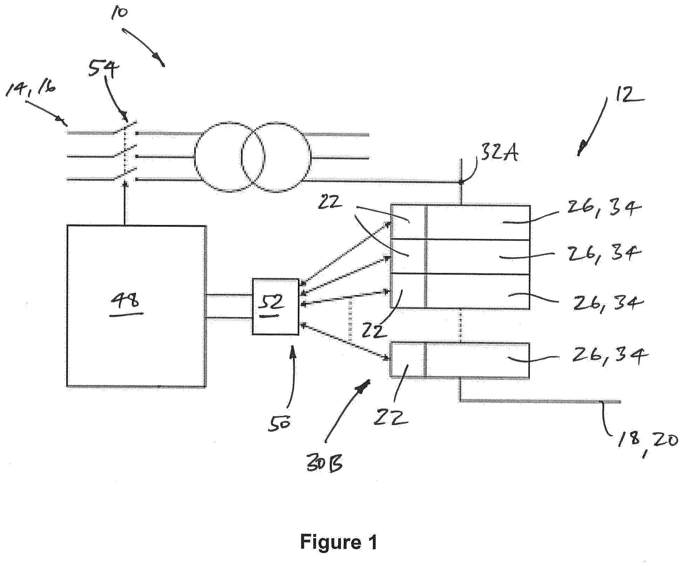

A converter assembly according to a first embodiment of the invention is designated generally by reference numeral 10 and is shown in Figure 1.

The first converter assembly 10 includes a converter 12 (only a portion of which is shown in Figure 1) that in use interconnects a first electrical network 14, which in the embodiment shown is a three-phase A, B, C AC network 16, with a second electrical network 18, which in the embodiment shown is a DC network 20. In other embodiments of the invention (not shown) the nature of the first and second electrical networks 14, 18 may differ to those of the first embodiment.

The converter 12 includes a plurality of control modules 22, each of which is programmed to control directly, in accordance with a control program stored therein, the switching of a plurality of switches 24 in a corresponding switching module 26 of the converter 12. The converter 12 also includes a plurality of energy storage devices 28, each of which is configured to store energy so as to at least in part supply power to a corresponding control module 22, i.e. each energy storage device 28 is configured such that although its primary purpose may not be to supply power to an associated control module 22, it is able to divert some of its store of energy in a manner capable of powering the said associated control module 22.

More particularly the converter 12 includes hundreds of switching modules 26 in each limb portion (only one of which such limb portion, i.e. a lower limb portion 30B, is shown in Figure 1). By way of a specific example the number of switching modules 26 may be 352, although this can vary from one converter to another, e.g. depending on the exact nature and performance rating of the components included in each switching module 26, the parameters of the first and second electrical networks 14, 18 and the desired rating of the overall power transmission scheme.

The lower limb portion 30B shown forms part of a converter limb which corresponds to phase A of the three-phase AC network 16, and which includes an upper limb portion (not shown) that extends on the other side of an AC terminal 32A within the converter limb. The converter 12 also includes two other converter limbs (not shown), each of which corresponds to a respective other phase B, C of the three-phase AC network 16, and each of which includes upper and lower limb portions which in turn include hundreds of switching modules 26.

It follows that a typical converter 12 will include many hundreds of switching modules 26 in its various converter limbs, e.g. over 2100 in the embodiment described.

In the embodiment shown in Figure 1, the switching modules 26 are connected in series with one another and each switching module 26 has a number of switches 24 which are connected in parallel with an energy storage device 28 in the form of a capacitor 36. Each switch 24 includes a semiconductor device 38 in the form of, e.g. an Insulated Gate Bipolar Transistor (IGBT) which is connected in parallel with an anti-parallel diode 40. It is, however, possible to use another form of energy storage device, as well as other semiconductor devices and other switching arrangements.

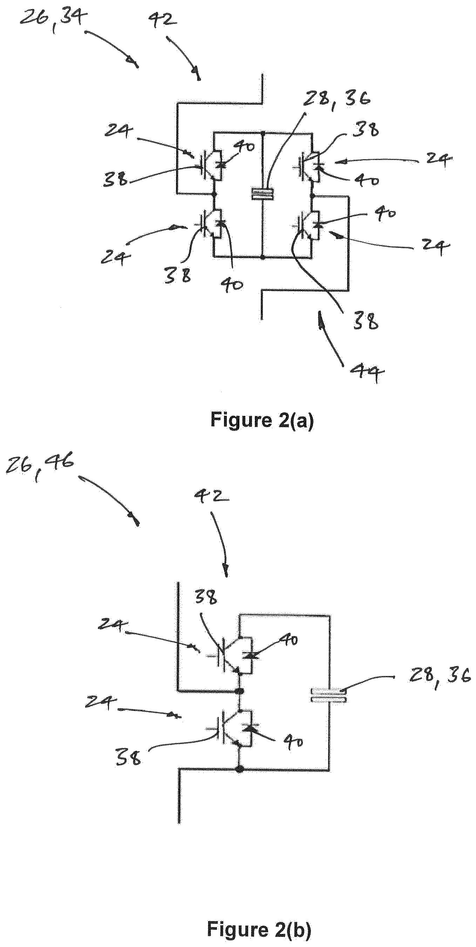

Figure 2(a) shows, by way of example, a first type of switching module 34 that is included within each limb portion 30B of the converter 12 shown in Figure 1.

The first type of switching module 34 includes first and second pairs 42, 44 of switches 24 and a capacitor 36 that are connected in a known full bridge arrangement to define a 4-quadrant bipolar module. During operation of the converter 12, i.e. while the converter 12 is in an on-line condition, switching of the switches 24 selectively directs current through the capacitor 36 or causes current to bypass the capacitor 36 such that the first sub-module 24 can provide zero, positive or negative voltage and can conduct current in two directions.

Figure 2(b) shows an example, alternative second type of switching module 46 which may be included in one or more limb portions of the converter 12 shown in Figure 1, either instead of or as well as the first type of switching module 34 mentioned above. The second type of switching module 46 includes only a first pair 42 of switches 24 which is connected in parallel with a capacitor 36 in a known half-bridge arrangement to define a 2-quadrant unipolar module. In a similar manner to the first type of switching module 34, switching of the switches 24 in the second type of switching module 46 during operation of an associated converter again selectively directs current through the capacitor 36 or causes current to bypass the capacitor 36 such that the second type of switching module 46 can provide zero or positive voltage and can conduct current in two directions.

In this manner, in the embodiment shown, it is possible to build up a combined voltage within each limb portion 30B by combining the individual voltage available from each switching module 26, i.e. from each first type of switching module 34. Accordingly, each of the switching modules 26 works together to permit each limb portion 30B to provide a stepped variable voltage source, which allows the generation of a voltage waveform by each limb portion 30B using step-wise approximation.

Operation of the switching modules 26 in each limb portion 30B of the converter 12 in this manner can be used to generate an AC voltage waveform at the AC terminal 32A (only one shown in Figure 1) corresponding to each phase A, B, C of the AC network 16 and thereby enable the converter 12 to transfer power between the AC and DC networks 16, 20.

Each switching module 26 is arranged in direct communication with a respective corresponding control module 22 that is programmed to control directly the switching of the switches 24 therein. In other embodiments of the invention (not shown) two or more switching modules may be arranged in direct communication with the same single control module 22 that is programmed to control directly the switching of the switches 24 in all of the switching modules 26 it is so arranged in direct communication with.

In the meantime, the capacitor 36 within each switching module 26 acts to supply power to the corresponding control module 22 with which the said respective switching module 26 is arranged in direct communication. In embodiments where a plurality of switching modules 26 share a common control module 22, two or more of the the respective capacitors 36 within each such switching module 26 may act together, or a single capacitor 36 may act alone, to supply power to the shared common control module 22.

It follows that the converter 12 shown includes an identical number of control modules 22 to the number of switching modules 26, i.e. over 2100 in the embodiment described by way of example.

Continuing with the converter assembly 10 as a whole shown in Figure 1, the assembly 10 also includes a high-level controller 48 that is arranged in communication with the converter 12 through each of the control modules 22 included within the converter 12. The high-level controller 48 supervises the overall operation of the converter 12, such as establishing individual current and voltage demands that each limb portion 30B must provide, while the respective control modules 22 directly control individual switches within the converter 12 (the coordinated switching of which is required to cause the converter 12 to provide the established current and voltage demands).

Communication between the high-level controller 48 and each of the control modules 22 is via a passive optical network 50 which includes an optical coupler 52 to interface between the high-level controller 48 and each of the control modules 22. In other embodiments of the invention (not shown), communication between the high-level controller 48 and each of the control modules 22 may be by way of individual, i.e. non-networked point-to-point, optical fibres running between the high-level controller 48 and each of the control modules 22.

In still further embodiments of the invention other communication techniques may be employed.

The high-level controller 48 is programmed to transition the converter 12 from an on-line condition, i.e. a condition in which the converter 12 is operating (by way of switching of the switches 24 to selectively direct current through the capacitor 36 or cause current to bypass the capacitor 36 of each switching module 26) to provide a stepped variable voltage source within in each limb portion 30B thereof, to an off-line condition, i.e. a condition in which such switching ceases and stepped variable voltage sources are not provided.

During such a transition of the converter 12 from an on-line condition to an off-line condition, each energy storage device 28, i.e. each capacitor 36 in each switching module 26, discharges the energy stored therein. In respect of the converter assembly 10 shown and described hereinabove, such discharge of the stored energy of each capacitor 36 is initiated by having the high-level controller 48 block the converter 12, i.e. instruct each control module 22 to open each switch 24 which it controls, and then open a circuit breaker 54 associated with each phase A, B, C of the AC network 16.

In addition to the foregoing, the high-level controller 48 is further programmed to replace the control program of each control module 22 within the converter 12 during its aforementioned transition from an on-line condition to an off-line condition, and more particularly is further programmed to replace the control program of each control module 22 as each capacitor 36 discharges the energy stored therein. More particularly still the high-level converter 12 is so programmed in order to concurrently replace the control program of all control modules 22.

Optionally the high-level controller 48 may be programmed to transition the converter 12 into a standby mode before each capacitor 36 begins to discharge the energy stored therein, i.e. before the converter 12 is blocked and the circuit breakers 54 are opened.

In such a standby by mode, operation of the converter 12 is throttled back with power and current levels being reduced and the frequency at which the switches 24 within the switching modules 26 are switched being reduced to a minimum level simply to maintain charge in the associated capacitors 36.

Thereafter the high-level controller 48 may be programmed to transfer control program data to one or more control modules 22, e.g. for temporary storage in each such control module 22, in readiness for replacing the control program of each such control module 22. Such a step thereby provides a maximum amount of time for the replacement subsequently to be carried out.

In any event, the high-level controller 48 replaces the control program of a given control module 22 by transferring, via the passive optical network 50, a replacement control program to the control module 22.

At such a time, because none of the capacitors 36 has fully discharged, stored energy remains within each capacitor 36 and so each is able to continue supplying power to each associated control module 22 so as to permit each control module 22 to receive the replacement control program from the high-level controller 48, i.e. a programming interface (not shown) within each control module 22 can be powered to permit reprogramming of the control module 22.

Meanwhile, each control module 22 is configured to check (again powered by the residual energy in the associated capacitors 36) the replacement control program received from the high-level controller 48 for errors, and thereafter to communicate the outcome of a check of the received replacement control program to the high-level controller 48, e.g. by way of a check message sent to the high-level controller 48. One way in which each control module 22 may carry out such a check is to store the replacement control program in a non-volatile memory block within the control module 22 and to perform a Cyclic Redundancy Check on the stored file. A benefit of storing the replacement control program in a non-volatile memory block is that the reprogramming of the control module 22 can be suspended before it is started, e.g. if insufficient time remains to completely replace the original control program, and the replacement control program temporarily retained in the non-volatile memory block, e.g. while the converter 12 is powered up again. Thereafter reprogramming of the control module 22 can be instigated again during a subsequent transition of the converter 12 from an on-line condition to an off-line condition. However, other ways of carrying out the check are also possible.

The high-level controller 48 is, on receipt of a check message indicating an error in the replacement control program received by a given control module 22, programmed to resend the replacement control program to the said control module 22. Such resending of the replacement control program may be by way of a general broadcast to all control modules 22, with only those control modules 22 having previously identified an error acting upon the broadcast.

The high-level controller 48 is also programmed to abort further attempts to replace the control program of a given control module 22 following the receipt of multiple check messages indicating an error in the replacement control program received by the said given control module 22. In addition, the high-level controller 48 may consider aborting the process of replacing the control program of all control modules 22 if the number of control modules 22 sending check messages indicating an error is excessive, e.g. is more than about 1 % of the total number of control modules 22.

As well as the foregoing, the high-level controller 48 additionally establishes a minimum required energy storage level for each energy storage device 28, i.e. each capacitor 36. Each respective minimum required energy storage level corresponds to a remaining amount of energy discharge time, i.e. the remaining length of time (at a given expected discharge rate) that the respective capacitor 36 will be able to provide sufficient energy to power the control module 22 with which it is operatively associated.

In one example the minimum energy storage level for each capacitor 36 may be utilised in the following manner, i.e. after checking of the or each replacement control program by each control module 22 indicates successful transfer of the replacement control program, the high-level controller 48 checks the energy storage level of each capacitor 36, i.e. the actual amount of energy remaining in each capacitor 36, against the corresponding established minimum required energy storage level. The high-level controller 48 does this so as to determine whether the various capacitors 36 have enough energy remaining at that stage to allow sufficient time, i.e. whether the various capacitors 36 will be able to continue powering the associated control module 22 for a sufficient period of time, to permit the control program of the control module 22 to be replaced.

When replacement of the control program of each control module 22 is complete, each associated switching module 26 becomes operational under the control of the new, replacement control program and the respective control module 22 re-establishes normal communication with the high-level controller 48, before the remaining stored energy is depleted and the associated switching module 26 powers down.

Any control modules 22 and associated switching modules 26 that fail to reestablish normal communication with the high-level controller 48 (which may be indicative of a failure in replacing the control program) may be recorded in a log and their status investigated before the converter 12 is re-energised as part of transitioning back to an on-line condition.

If replacement of the control program of a given control module 22 and associated switching module 26 fails to complete successfully a switching module protection element (not shown), such as an electro-mechanical bypass switch, may be operated to bypass the particular switching module 26 from the remaining switching modules 26 in a given limb portion 30B, i.e. operated to effectively remove the particular switching module 26 from the current path through the given limb portion 30B to allow the limb portion 30B to continue operating without the said particular switching module 26. In some embodiments of the invention, it may be necessary for each control module 22, while it is having its control program replaced, to prevent fail-safe operation of a corresponding electro-mechanical bypass switch by, e.g. sending an appropriate control signal from the programming interface therein (which remains operational while the control program of the control module 22 is replaced).

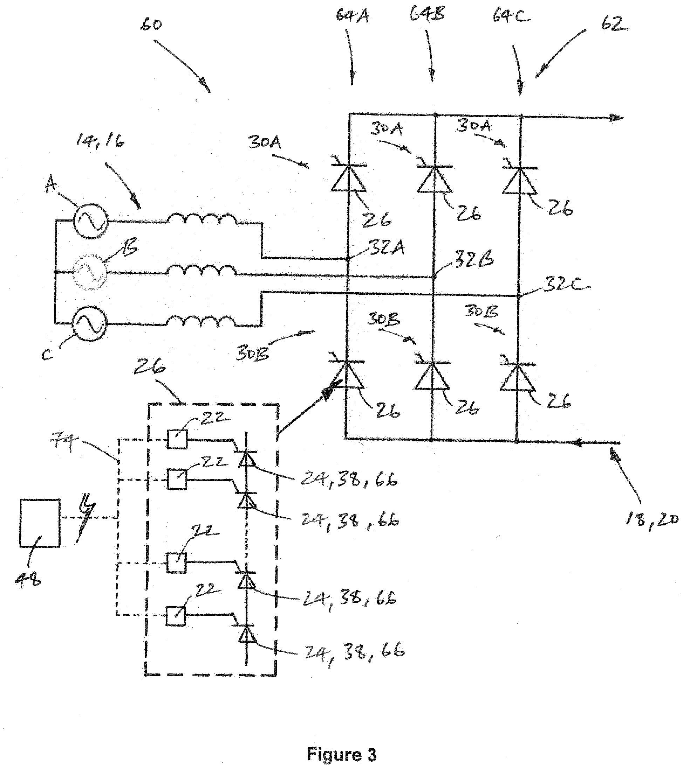

A schematic view of a second converter assembly 60 is shown in Figure 3. The second converter assembly 60 is very similar to the first converter assembly 10 and like features share the same reference numerals. However, in the second converter assembly 60 the first converter 12 is replaced by a second converter 62.

The second converter 62 again interconnects first and second electrical networks 14, 18, i.e. a three-phase A, B, C AC network 16 and a DC network 20 and the second converter 62 also includes a plurality of switching modules 26. However, the switching modules 26 in the second converter 62 are arranged in a different manner to those in the first converter 12.

More particularly, the second converter 62 includes six switching modules 26, each corresponding to a limb portion 30A, 30B of a given converter limb 64A, 64B, 64C within the second converter 62, and each of which is made up of a string of series-connected switches 24. In this embodiment, however, each of the switches 24 is a semiconductor device 38 in the form of a thyristor 66. In still further embodiments of the invention another different semiconductor device 38 may be used such as a diode, Light-Triggered Thyristor (LTT), Gate Turn-Off thyristor (GTO), Gate Commutated Thyristor (GCT) or Integrated Gate Commutated Thyristor (IGCT).

Each thyristor 66 has a respective, individual control module 22 arranged in direct communication with it, with each such control module 22 being programmed to control directly the switching of the corresponding thyristor 66 according to a control program stored within the said control module 22. In other embodiments of the invention two or more switches 24, i.e. two or more thyristors 66, may be arranged in direct communication with a single, shared control module 22.

In any event, typically each switching module 26 will include a string of series-connected switches that has many tens of thyristors 66 therein, e.g. 10 to 100, and so the second converter 62 similarly includes a correspondingly large number of control modules 22.

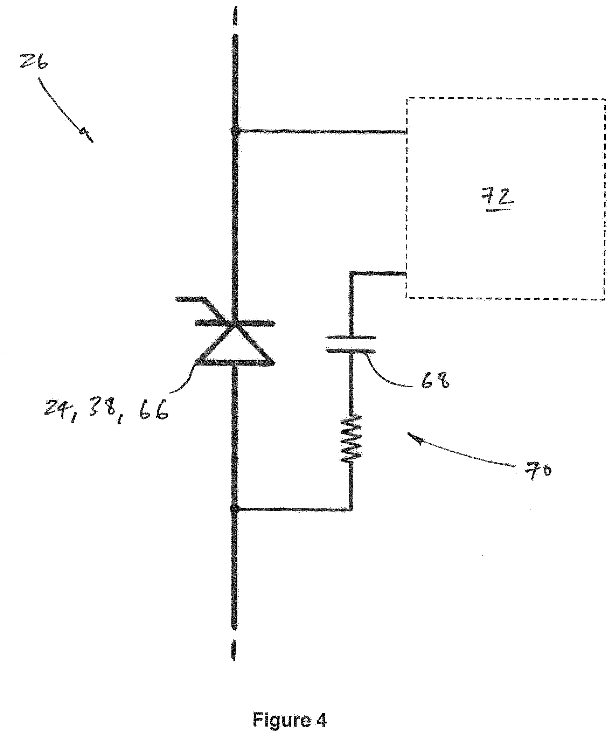

Each thyristor 66 has an energy storage device 28 connected in parallel therewith in the form of a snubber capacitor 68 within a resistor-capacitor snubber circuit 70 that is electrically connected to the anode of each respective thyristor 66, as shown schematically in Figure 4. While the primary purpose of each such snubber capacitor 68 is to supress a rapid rise in voltage across the corresponding thyristor 66, some of its store of energy can be scavenged, e.g. by an electrolytic storage capacitor within a power supply circuit 72, so as to power a corresponding control module 22.

The second converter 62 and the switching modules 26 therein are similarly arranged in communication with the high-level controller 48 by point-to-point optical fibres 74, although other communication techniques are also possible. The high-level controller 48 in the second converter assembly 60 is therefore programmed in an essentially identical manner to the high-level controller 48 in the first converter assembly 10, i.e. to both transition the second converter 62 from an on-line condition, i.e. in which an associated circuit breaker (not shown) is closed and the second converter is de-blocked with the thyristors 66 therein switching, to an off-line condition, i.e. in which the second converter 62 is blocked by preventing the thyristors 66 from switching and the associated circuit breaker is open, and concurrently replace the control program of each control module 22 during the aforesaid transition.

## Claims

1. A converter assembly (10; 60) comprising:
a converter (12; 62) for interconnecting first and second electrical networks (14; 18), the converter (12; 62) including:
at least one control module (22) programmed to control directly in accordance with a control program stored therein the switching of one or more switches (24) in a switching module (26; 34; 46) of the converter (12; 62); and
at least one energy storage device (28) configured to store energy to at least in part supply power to at least one corresponding control module (22); and
a high-level controller (48) arranged in communication with the converter (12; 62) and the or each control module (22) therein, the high-level controller (48) being programmed to transition the converter (12; 62) from an on-line condition to an off-line condition during which transition the or each energy storage device (28) within the converter (12; 62) discharges the energy stored therein, and the high-level controller (48) being further programmed to replace the control program of at least one control module (22) of the converter (12; 62) during the said transition from an on-line condition to an off-line condition.

2. A converter assembly (10; 60) according to Claim 1, wherein the converter (12; 62) includes a plurality of switching modules (26; 34; 46), each of which switching module (26; 34; 46) includes a plurality of switches (24) connected in parallel with a respective corresponding energy storage device (28), and each of which switching module (26; 34; 46) is arranged in direct communication with a respective corresponding control module (22) programmed to control directly the switching of the plurality of said switches (24).

3. A converter assembly (10; 60) according to Claim 1, wherein the converter (12; 62) includes a switching module (26) including a plurality of switches (24), each of which switch (24) has an energy storage device (28) connected in parallel therewith, and each of which switch (24) is arranged in direct communication with a respective corresponding control module (22) programmed to control directly the switching of the said corresponding switch (24).

4. A converter assembly (10; 60) according to any preceding claim, wherein the converter (12; 62) includes a plurality of control modules (22) and the high-level controller (48) is programmed to replace the control program of a sub-set of all of the control modules (22).

5. A converter assembly (10; 60) according to any preceding claim, wherein the converter (12; 62) includes a plurality of control modules (22) and the high-level controller (48) is programmed to concurrently replace the control program of all control modules (22).

6. A converter assembly (10; 60) according to any preceding claim, wherein the or each control module (22) is configured to check a replacement control program received from the high-level controller (48) and to communicate the outcome of a check of the received replacement control program to the high-level controller (48).

7. A converter assembly (10; 60) according to Claim 6, wherein the high-level controller (48) is, on receipt of a check message indicating an error in the replacement control program received by a given control module (22), programmed to resend the replacement control program to the said control module (22).

8. A converter assembly (10; 60) according to Claim 7, wherein the high-level controller (48) is programmed to abort further attempts to replace the control program of a given control module (22) following the receipt of multiple check messages indicating an error in the replacement control program received by the said given control module (22).

9. A converter assembly (10; 60) according to any of Claims 6 to 8, wherein the high-level controller (48) additionally establishes a minimum required energy storage level for the or each energy storage device (28), the or each respective minimum required energy storage level corresponding to a remaining amount of energy discharge time.

10. A converter assembly (10; 60) according to Claim 9, wherein after checking of the or each replacement control program by the or each control module (22), the high-level controller (48) checks the energy storage level of the or each energy storage device (28) against the corresponding established minimum required energy storage level.

11. A converter assembly (10; 60) according to any preceding claim, wherein the high-level controller (48) being programmed to transition the converter (12; 62) from an on-line condition to an off-line condition includes transitioning the converter (12; 62) into a standby mode before the or each energy storage device (28) within the converter (12; 62) begins to discharge the energy stored therein.
